# EUROPEAN PATENT SPECIFICATION

(11) **EP 4 002 778 B1**
(45) Date of publication and mention of the grant of the patent: **19.03.2025**
(21) Application number: 20306382.1
(22) Date of filing: 16.11.2020
(51) Int. Cl.: H04L 45/12

(54) **METHOD AND SYSTEM FOR ROUTING PATH SELECTION**
VERFAHREN UND SYSTEM ZUR ROUTINGPFADAUSWAHL
PROCÉDÉ ET SYSTÈME DE SÉLECTION DE CHEMIN DE ROUTAGE

(43) Date of publication of application: 25.05.2022
(73) Proprietor: Amadeus S.A.S., 06410 Biot (FR)
(72) Inventor: BARRIER, Anthony Alexis Ghislain, 06410 Biot - Sophia-Antipolis (FR); NANTY, Simon, 06410 Biot - Sophia-Antipolis (FR); LE TOQUIN, Youri Thibault Marie, 06410 Biot - Sophia-Antipolis (FR); BELGANI, Chakib, 06410 Biot - Sophia-Antipolis (FR); VIOLLET, Erwan, 06250 Mougins (FR)
(74) Representative: Samson & Partner Patentanwälte mbB

(56) References cited:
- US-A1- 2012 030 150
- US-A1- 2019 121 350

## Description

### FIELD OF THE INVENTION

The present invention generally relates to methods and systems for selecting routing paths, in particular, for selecting a subset of routing paths before querying details of the routing paths.

### BACKGROUND

The search for a route in a network, i.e. a path from a start node to an end node via one or more edges, is crucially relevant in many areas. If the networks, which are nothing different than graphs, are relatively simple, standard algorithms, such as Depth First Search, can be used to determine all possible routes. But this gets impossible if the graphs get larger. In many cases, the path fulfilling a single target function is requested, for example the shortest path from the start node to the end node should be determined. If the graphs are again not too large, this problem can be solved by applying algorithms like Dijkstra's algorithm or A*-algorithm. However, in reality the graphs are often comprising hundreds or thousands of nodes and edges and a plurality of target functions may be relevant for a client when selecting a path. Hence, it is impossible to determine the target functions for all possible routes in a limited time and provide the client with the results in an applicable response time.

For example, if data packets have to be transferred from a source computing system to a target computing system, a plurality of paths can be chosen to route the data packets. The problem gets more complex if edges of a route may be provided by different operators or carriers, which may not cooperate with other operators. Moreover, an operator may also provide different data volumes and/or transmission speeds on a same edge in the network depending on rules regarding a tariff or the estimated utilization of the network at different transmission time. These further characteristics of the route may lead to an exponential increase of the search space.

Another example is the search for a flight path from a departure location to a destination location. There may be an abundance of possible flights operated by different carriers - with or without intermediate stops - fulfilling the request. On each of these flights may apply different rules that define which fare(s) can be used. To finally build the products, i.e. the specific flights with their details (flight number, fare, price, baggage, etc.), hundreds or thousands of queries may be required to be sent to the carriers or the meta provider platforms.

The present invention tackles this problem by defining routing paths as a combination of a route and at least one characteristic. These routing paths are then filtered by the use of a machine learning model to reduce the search space for querying details of routes.

US 2019/0121350 A1 describes a system for data collection in an industrial environment. One aspect is a method for data communication between a first node and a second node over a plurality of data paths coupling the first node and the second node. Messages are sent - depending on the respective message characteristics - over a first path and a second path with different path latencies. US2012/0030150 A1 presents a routing method and system that combine a cognitive learning module with a link state protocol. Routing paths are determined based on stored link state information by a learning algorithm.

### SUMMARY

The present invention is defined by the independent claims.

A first aspect of the invention concerns a computer-implemented method for selecting routing paths.

According to a second aspect of the invention, a distributed computing system for selecting routing paths is provided.

According to a third aspect of the invention, a computer program for selecting routing paths is provided.

Further aspects are defined by the dependent claims.

### BRIEF DESCRIPTION OF THE FIGURES

The subsequent description of embodiments is based on the accompanying set of figures in which similar reference numerals refer to similar elements and messages and in which:
Fig. 1A is a schematic overview of the distributed computing environment as described herein;
Fig. 1B depicts a high-performance computing system and Fig. 1C depicts an inference computing system according to embodiments;
Fig. 2 presents a high-level flow diagram of the method described herein;
Fig. 3 is a medium-level presentation of how the machine-learning model is trained;
Fig. 4 depicts a medium-level example of how to determine a subset of routing paths;
Fig 5A, B, and C show examples of how details of the subset of routing paths are queried, valid routing paths selected and returned to the client device;
Fig. 6 depicts the workflow of the method described herein in a flight search environment;
Fig. 7 presents a diagram of how the machine learning model is trained in a flight search environment;
Fig. 8 presents a diagram of how the machine learning model is applied for selecting fare paths in a flight search environment.
Fig. 9 depicts how valid fare paths are determined; and
Fig. 10 shows the workflow of the method described herein in a network routing environment.

### BRIEF DESCRIPTION OF THE FIGURES

As already outlined at the outset, the methodologies described herein relate to methods and systems for selecting routing paths, in particular, to the selection of a subset of routing paths before querying details of the routing paths. Before coming to the description of the figures, a few explanations of wordings used in this application are presented.

A route refers to a path from a start node to an end node in a network. A network is defined as a combination of nodes and edges, wherein an edge connects two nodes. The route may also comprise one or more intermediate nodes but may also be a direct link between the start node and end node. If the start node and the end node are identical, e.g. for a round trip in a travel network, usually at least one intermediate node is provided. Additional intermediate nodes can also be determined while searching for possible routes in the network.

Routing paths generally refer to a combination of a route and at least one characteristic of a set of characteristics. The set of characteristics may comprise any information that is useful for a selecting routing paths to be queried, e.g. if a route or a part of the route. For example, the characteristics may be determined to help the model identify the most relevant routing paths.

For example, if routes in computer network are considered, characteristics of the routes may relate to the volume of data that can be sent on parts of the route, also called segments of the route, per second, e.g. the data rate or bitrate. The set of characteristics may then for example comprise {very high, high, medium, low, very low}, wherein the thresholds are individually defined and may be for example {>1000Mbits/s, 1000-500Mbits/s, 500-100Mbits/s, 100-50Mbit/s, <50Mbits/s}.

A routing path may then be defined by how the data is routed in the network, e.g. over which intermediate nodes, provided by which operators etc., and by at least one characteristic of the route, e.g. high data rate for the complete route or high data rate for a first segment provided by a first operator and very high data rate for a second segment provided by a second operator. Depending on the number of characteristics in the set of characteristics and the possible subsegments of a route that may have different characteristics, the number of routing paths is a multiple of the number of routes.

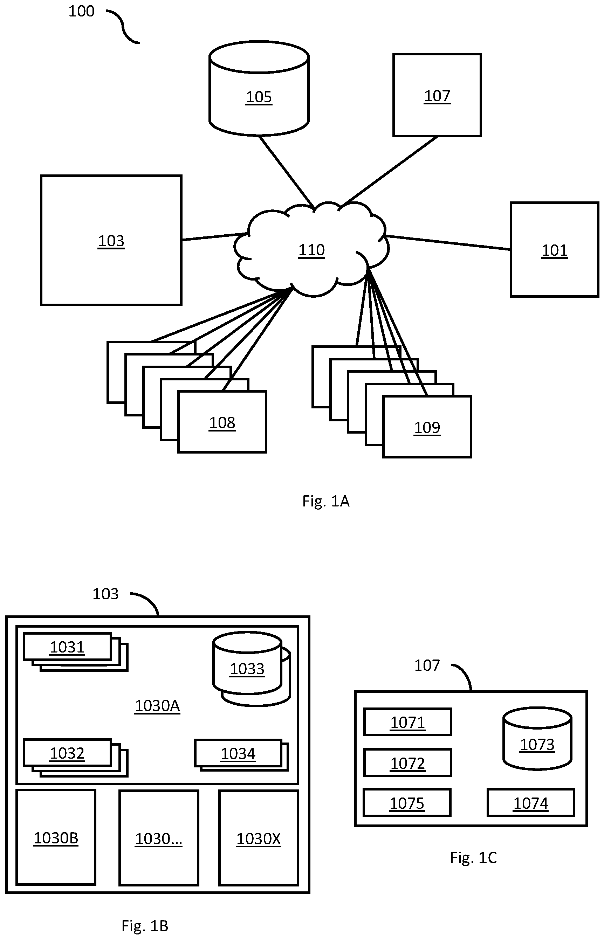

Now turning to Fig. 1A, which is a schematic overview of the distributed computing environment 100, in which a selecting routing paths may be required. The distributed computing environment 100 comprises a service computing system 101, a dedicated high-performance computing system 103, a data storage 105, a dedicated inference computing system 107, at least one client device 108, and at least one provider computing system 109 that are all connected over a network 110. The network 110 may be a wide area network, global network, the Internet, or similar network, may be a public or a private network, and may include multiple interconnected networks as is known in the art.

The service computing system 101 may be a computing system of a routing specialist, a travel content provider, a booking agent, a meta search provider and the like, which receives request from client devices 108 over the network 110 for routes, routing path and/or other information that requires to determine routes and/or routing paths. The service computing system 101 may consist of a plurality of servers in a server infrastructure that handle requests of the client devices 108. A plurality of applications may be executed on these servers to execute the method described herein as well as to execute several other tasks (not described).

The dedicated high-performance computing system 103 is specifically designed for training of machine-learning models for evaluating routing paths. The dedicated high-performance computing system 103 may be part of the same server infrastructure as the service computing system 101 and/or located at the same location but may also be located in a remote location and independent of the service computing system 101.

The data storage 105 may comprise volatile and non-volatile memory, multilevel cell flash memory, triple level cell flash memory, and/or cloud storage or backup systems. It should further be appreciated that the data storage 105 described herein may be a combination of multiple storage resources, including but not limited to those referenced herein. The data storage 105 may further include different storage technologies, may be situated at different locations, or may also be part of the same server infrastructure as the service computing system 101. The data storage 105 is used for logging data of selected routing paths in response to requests from client devices and may also be used for storing any other kind of data required or processed by the service computing system 101, the dedicated high-performance computing system 103, or dedicated inference computing system 107.

The dedicated inference computing system 107 is specifically designed for applying machine-learning models may be part of the same server infrastructure as the service computing system 101 and/or located at the same location but may also be located in a remote location and independent of the service computing system 101. The dedicated inference computing system 107 may be connected with the dedicated high-performance computing system 103, the data storage 105, and the service computing system 101. The connection may be a direct link in a network, such as the network 110, but may also comprise an indirect connection. For example, the dedicated high-performance computing system 103 may store data in the data storage 105, which is then retrieved by the dedicated inference computing system 107.

The at least one client device 108 may be a computing system, e.g. personal computer, server or server farm, mobile phone etc., that requests a route to send data, a computing system of a meta search engine, of a travel agent or of an end user. The at least one client device 108 sends requests to the service computing system 101 over the network 110 and receives replies to its requests over the network 110.

The at least one provider computing system 109 may be a computing system of a carrier or travel provider, e.g. an airline or a train company, of a mobile phone operator, of a network operator, and the like. The at least one provider computing system 109 may also be allowed to store data in the data storage 105 or have access to other components of the distributed computing system 100. Alternatively, the dedicated high-performance computing system 103, the data storage 105, and the dedicated inference computing system 107 may be encapsulated from other components of the distributed computing system 100 and may only be accessed by the service computing system 101, which has an interface to communicate with the client devices 108 and the provider computing systems 109.

Fig. 1B gives a more detailed overview of the dedicated high-performance computing system 103. The dedicated high-performance computing system 103 may comprise a cluster of servers 1030A, B, C, ..., X. Each server 1030A, B, C, ..., X is equipped with at least one central processing unit (CPU) 1031 and at least one graphics processing unit (GPU) 1032 that enable parallel processing of the training of machine-learning models. The CPUs 1031 may be multi-core processors comprising a plurality of CPU cores, each including a register, at least one processing unit, such as an arithmetic logic unit (ALU), a floating-point unit (FPU) or the like, and other optional components, such as a memory management unit (MMU), a shared memory, or a cache.

The GPUs 1032 may also comprise a plurality of GPU cores or streaming multiprocessors, which comprise many different components, such as at least one register, at least one cache and/or shared memory, and a plurality of ALUs, FPUs, tensor processing unit (TPU) or tensor cores, and/or other optional processing units. Each server 1030A, B, C, ..., X may also comprise at least one storage system 1033, such as a random-access memory (RAM), read-only memory (ROM), and the like, and various other components 1034, such as a motherboard, a bus, a cooler, and the like. The high-performance computing system may also comprise other storage systems (not shown) comprising data management systems for high-performance access, e.g. directly provisioned on a server 1030A, B, C, ..., X and/or made available on a storage platform that is in close proximity to the servers 1030A, B, C, ..., X.

Fig. 1C presents a more detailed overview of the dedicated inference computing system 107. The dedicated inference computing system 107 may comprise at least one CPU 1071, at least one GPU 1072, at least one storage system 1073 and/or various other components 1074, such as a motherboard, a bus, a cooler, and the like. Usually, the dedicated inference computing system 107 comprises less components, i.e. a lower number of GPUs, CPUs, storage systems etc., than a server of the servers 1030A, B, C, ..., X of the dedicated high-performance computing system 103. However, in some embodiments, the the dedicated inference computing system 107 may be equipped like a server 1030A, B, C, ..., X of the dedicated high-performance computing system 103.

In some embodiments, the dedicated inference computing system 107 comprises a hardware-based inference accelerator architecture, that is, the inference computing system comprises specifically designed chips 1075 in addition to the CPU 1071 and/or GPU 1072, e.g. a neural processing unit (NPU) for acceleration of inference calculations of neural networks or other hardware accelerator units for inference calculations of other machine-learning models implemented on field-programmable-gate-arrays (FPGA) and application-specific-integrated-circuit (ASIC). The hardware-based inference accelerator architecture is designed to accelerate a segment of inference calculations of the machine-learning model. For example, specifically designed chips for neural network inference may consist of an array of processing engines, wherein each processing engine performs the computation of a neuron in the neural network. Or specifically designed chips for gradient boosted trees inference may comprise many a plurality of small static random-access memories (SRAM), each having a plurality of floating-point adders for updating the gradients of the trees.

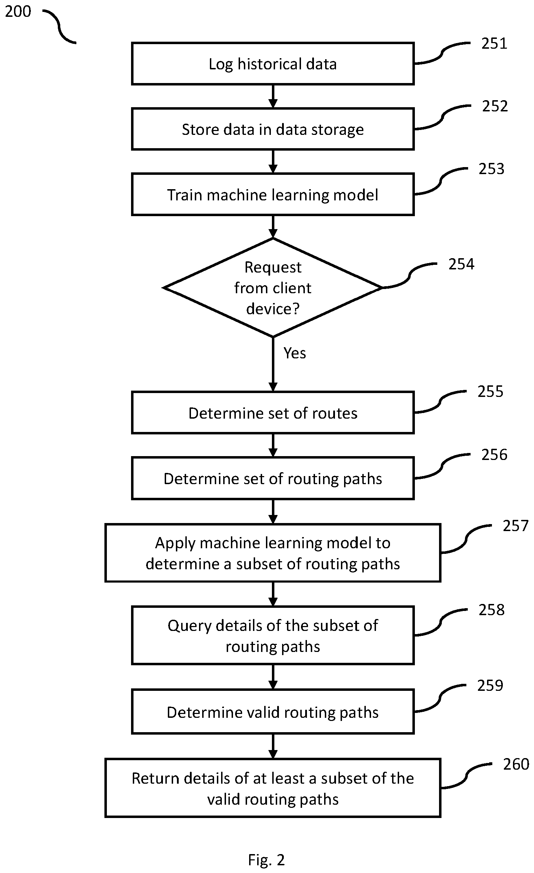

The method for selecting routing paths described herein is presented in the high-level flow diagram of Fig. 2. Basically, the method 200 comprises two stages. The first stage (comprising boxes 251 to 253) can be attributed to training of a machine learning model, the second stage (comprising boxes 254 to 260) to application of the machine learning model.

To enable the training of the machine learning model, data of selected routing paths in response to historical requests from client devices 108 is logged (box 251). The service computing system 101 may therefore create files or database entries that comprise information about a requested routing path. In some embodiments, the files or database entries comprise the routing paths determined in response to a historical request from a client device, the respective routing paths provided to the requesting client device and the routing paths selected by the requesting client device. The files or database entries may also comprise further data that is useful for later processing, such as data extracted from the historical request, intermediate nodes, GPS information of the location of the start node, the end node, and/or intermediate node, time/date of the request, providers of the route, and the like. In other embodiments, the files or database entries may be logged at least partially by a third-party system.

Then, the historical data is stored in a data storage (box 252), such as for example the data storage 105. In other embodiments, the historical data is alternatively or additionally stored in a memory of the service computing system. This historical data is thereafter used for training of a machine-learning model (box 253). This training may be performed at a dedicated high-performance computing system 103.

The machine learning model may be a supervised or semi-supervised model. It may be one of a gradient boosted tree, a neural network, or a random forest or a combination thereof. The machine learning model may also be updated regularly, e.g. every day, week, or month, by restarting the training including newly logged data. The machine learning model is trained to output a selection prediction for a routing path. When the training has been finished, the machine learning mode, i.e. the model parameters, may be stored at the data storage 105, at the service computing system 101 at the dedicated inference computing system 103, or at any suitable other location from which they may be accessed by the dedicated inference computing system 103.

With the help of the machine learning model, the process of presenting/returning routes or routing paths to a requesting client device can be accelerated. The method 200 simplifies the computation of routing paths returned to client devices 108 by selecting routing paths that have the highest probabilities to be selected by the client device 108. As the most useful routing paths can be determined by the machine learning model, many other routing paths can be discarded, which reduces the search space, i.e. the number of routing paths for which details have to be queried. Thereby, the speed of presenting routing paths to the client devices 108 is enhanced and the computational costs are reduced. For example, it has been measured that the response time for answering customer inquiries is reduced by up to 15% and the consumption of the computational resources by up to 50% while ensuring to find the routing paths satisfying the requirements of the client devices. These improvements hold even more for embodiments, in which the application of the machine learning model is performed on the dedicated inference computing system 107.

After a request from a client device 108 (box 254), a set of routes is determined that fulfils the request. For example, if the client device 108 requests to send data packages from server A to server B in a server network, the method 200 determines all possible or applicable routes for the data packages. Let the number of applicable routes from server A to server B be three, namely from A over intermediate server 1 and intermediate server 2 to server B {A => S1 => S2 => B}, from server A over intermediate server 2 to server B {A=> S2 => B}, and from server A over intermediate server 1 to server B {A => S1 => B}. In some embodiments, this determination is executed at the service computing system 101 but, in other embodiments, it may also be executed at the inference computing system 107 or at any other suitable computing system or even distributed among several computing systems.

Then, a set of routing paths is determined (box 256) by combining the set of routes with characteristics from the set of characteristics. For example, if the set of characteristics comprise only two values, e.g. {1, 2}, for the number of data channels that can be booked on each edge of the server network described above, the resulting set of routing paths will consist of 2^3 (for the first route) + 2^2 (for the second route) + 2^2 (for the third route) =16 routing paths. Hence, as can be easily seen, the number of routing paths may be much higher than the number of routes so that querying details of all routing paths becomes impossible for many applications.

The trained machine learning model is applied (box 257) on the set of routing paths to reduce this set. In some embodiments, this application of the machine learning model is performed at the dedicated inference computing system 107. Alternatively, the inference calculations of the machine learning model may also be executed at the service computing system 101 and/or at the dedicated high-performance computing system 103. The machine learning model is applied on each routing path of the set of routing paths so that a selection prediction is calculated for each of the routing paths.

Thereafter, a subset of routing paths is determined for which a threshold, e.g. a percentage threshold, is lower than the selection prediction. This determination may take place at the dedicated inference computing system 107, at the high-performance computing system 103 or at the service computing system 101. In some embodiments, the threshold is set by an application running in the distributed computing system 100 or hardcoded in the computer program determining the subset of routing paths.

Alternatively, the threshold may be adapted according to a measured computational capacity for querying details of the subset of routing paths. The computational resources currently used by the service computing system 101 may be measured and the free capacity of the computational resources may thereby be determined. The threshold may then be determined by reading a table stored in a data storage, such as the data storage 105, in which thresholds are mapped to free computational capacities.

For example, if a free computational capacity of the service computing system 101 is determined to be 30%, the threshold may be set to 0.5, i.e. every routing path is taken into the subset of routing path for which the selection prediction is higher than 50%. Or if a free computational capacity of the service computing system 101 is determined to be 15%, the threshold may be set to 0.8, i.e. every routing path is taken into the subset of routing path for which the selection prediction is higher than 80%. This ensures that - if the computing system is able to query more details - the client device can be provided with more information, i.e. a larger set of details for routing paths.

The details of the determined subset of routing paths are then queried (box 258). This may comprise querying the providers of the routing paths and/or querying a local or third-party database for the details, for example, the data storage 105. The details may comprise a final price and/or rules, e.g. individual rules for the routing path and/or standard industry rules, for selecting the routing path, e.g. for sending data packets along this path in the server network example. In embodiments in which the routing paths relate to flights, the details may also comprise a flight number, a departure and/or arrival time, stop-over times, baggage rules, and included meals.

After having queried the details of the subset of the routing paths, valid routing paths are determined (box 259). In some embodiments, rules for selecting a routing path have to be analysed to determine if a routing path can be validly selected. In other embodiments, valid routing paths are determined based on other details, e.g. if the client device 108 has excluded some details in the request. In yet other embodiments, the details may comprise a flag that enables a determination if a routing path is a valid routing path.

Finally, at least a subset of the queried details is returned to the client device 108. In some embodiments, all queried details are returned to the client device 108, however, in alternative embodiments only a subset is returned. For example, as stated above, the details may comprise rules or flags that determine if a routing path may be selected by a client device 108. These details may not be returned to the client device 108. In some embodiments, the client device 108 may then select a routing path or even a plurality of routing path and/or send new requests or other requests to the service computing device 101.

In an additional embodiment, while training the machine learning model, at least one additional feature of a route may be determined that has an impact on the selected routing path. For example, analysis of parameters of the model and/or the output of the trained model may show that the degree of deviation from a direct connection may have an impact on whether a routing path is selected or not. Alternatively or additionally, it may be determined that carrier information, i.e. information about carriers providing the routes, has an impact on whether a routing path is selected or not. Then, this at least one additional feature is also determined for each logged routing path and used as additional for the training of the machine learning model. Moreover, in response to a request from the client device 108, the at least one additional feature of a route in the set of routing paths is determined and used as additional input for the inference calculations of machine learning model.

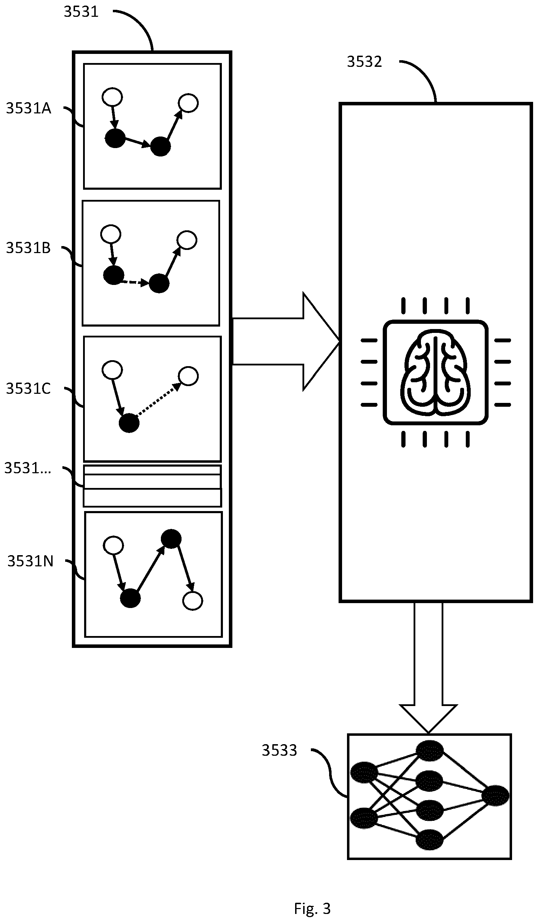

Fig. 3 corresponds to the box 253 of Fig. 2 and shows a more detailed but still medium-level view of the training of the machine learning model. The historical data 3531 stored in a data storage 105 comprises a plurality of routing paths 3531A...N from start to end nodes (empty nodes) over optional intermediate nodes (filled nodes). As can be seen, each routing path comprises the information of the route as well as characteristics, depicted with different shades of the edges.

For example, routing path 3531A only comprises solid edges between the nodes, which may correspond to the characteristics {1,1,1}. Routing path 3531B corresponds to the same route as routing path 3531A but comprises two solid edges and a dashed edge, which may correspond to the characteristics {1,2,1}. Routing path 3531C comprises a solid and a dotted edge, which may correspond to the characteristics {1,3}.

These routing paths 3531A...N are provided to a training phase 3532 of the machine learning model as well as further data. Further data may comprise details of the underlying query of the routing path, if the routing path was provided to the client device 108, and if the routing path was selected by the client device 108. The training results in model parameters and, thus, in a trained machine learning model 3533.

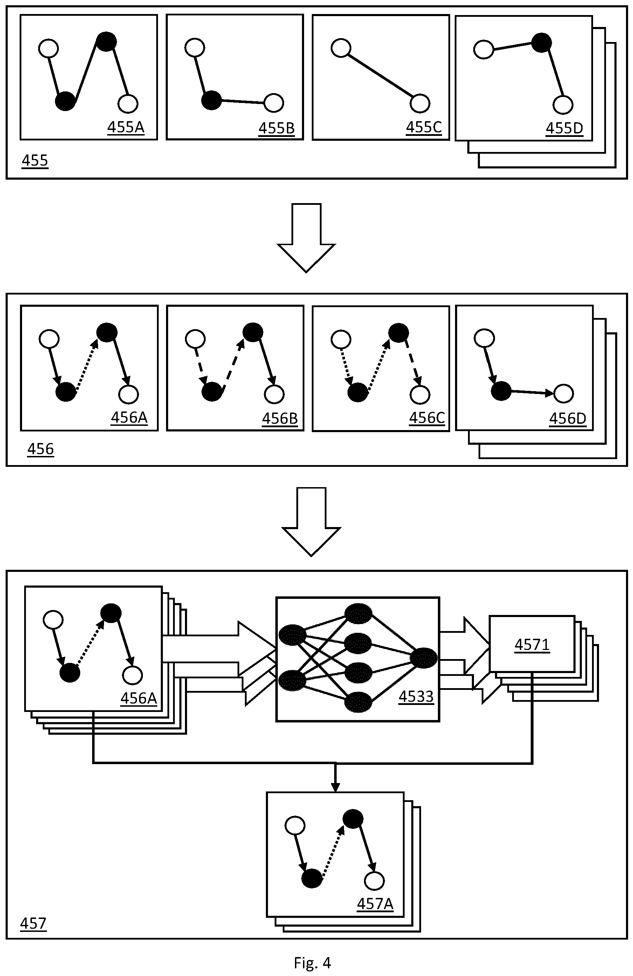

Fig. 4 depicts a medium-level example of determining the subset of routing paths, i.e. it is a more detailed view of boxes 355 to 257 of Fig. 2. Assuming the client device 108 requests details for routing paths from start node (upper left corner) to an end node (lower right corner). At first 455, a plurality of routes 455A, B, C, D, ... is determined, i.e. possible paths from the start node to the end node. Then 456, a plurality of routing paths 456A, B, C, D, ... is determined by combining each route with possible characteristics. This will usually result in a much higher number of routing paths than routes.

To determine the subset of routing paths 457, all these routing paths 456A, B, C, D, ... are propagated through the machine learning model 4533, which corresponds to the machine learning model 3533. If the output 4571, i.e. the selection prediction for the propagated routing path 456A, of the machine learning model 3533 is higher than a threshold, then the routing path 456A is taken into the subset of routing paths. Otherwise it is discarded. Hence, the resulting subset of routing path comprises fewer routing paths. In some embodiments, in particular if there is a high number of routing paths 456A, B, C, D, .... in the set of routing paths, it is preferable that the number of routing paths 457A, .... in the subset of routing paths is less than 80% of the number of routing paths 456A, B, C, D, ...., more preferably less than 50%, and even more preferably less than 20%.

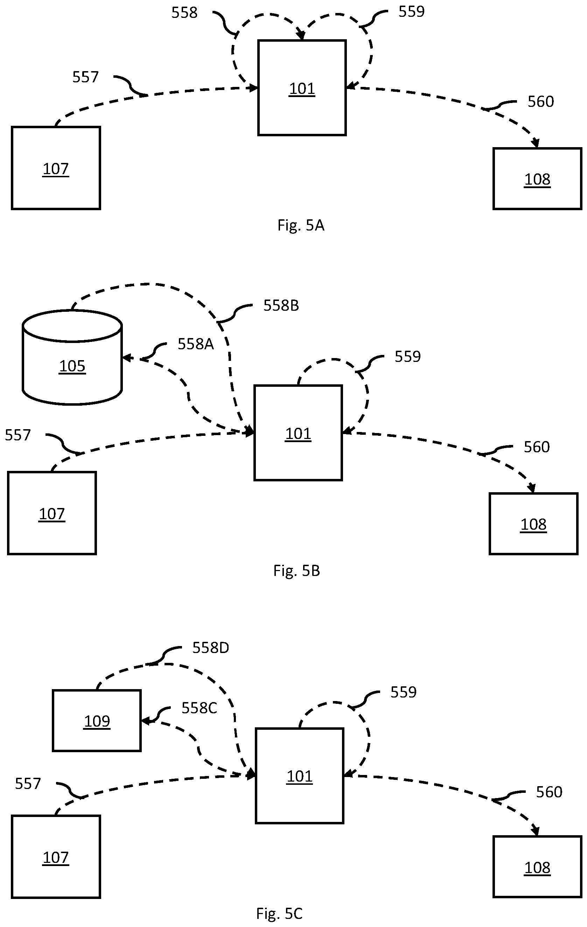

Fig 5A, B, and C show embodiments for querying details of the subset of routing paths, selecting valid routing paths and returning details to the client device 108. In the embodiment of Fig. 5A, the dedicated inference computing system 107 returns the subset of the routing paths to the service computing system 101, shown by dashed line 557. The service computing system 101 then queries the details of the routing paths comprised in the subset of routing paths by requesting the data from at least one database system that is part of the service computing system 101, shown by dashed line 558. Then, the service computing system 101 determines the valid routing paths, shown by dashed line 559. Finally, the results, i.e. at least a subset of the details of at least a subset of the valid routing paths are returned to the client device 108, shown by dashed line 560.

In the alternative embodiment of Fig. 5B, the dedicated inference computing system 107 returns the subset of the routing paths to the service computing system 101, shown by dashed line 557. The service computing system 101 then queries the details of the routing paths comprised in the subset of routing paths by sending requests to external database systems such as the data storage 105, shown by dashed line 558A. Then, the database system, e.g. the data storage 105, returns the details to the service computing system 101, shown by dashed line 558B. The service computing system 101 then determines the valid routing paths, shown by dashed line 559. Finally, the results, i.e. at least a subset of the details of at least a subset of the valid routing paths are returned to the client device 108, shown by dashed line 560.

In the alternative embodiment of Fig. 5C, the dedicated inference computing system 107 returns the subset of the routing paths to the service computing system 101, shown by dashed line 557. The service computing system 101 then queries the details of the routing paths comprised in the subset of routing paths by sending requests to the carriers of the respective routes, such as to the provider computing systems 109, shown by dashed line 558C. Then, the provider computing system 109 returns the details to the service computing system 101, shown by dashed line 558D. The service computing system 101 then determines the valid routing paths, shown by dashed line 559. Finally, the results, i.e. at least a subset of the details of at least a subset of the valid routing paths are returned to the client device 108, shown by dashed line 560.

The separate embodiments of Fig. 5A, B, and C may also be combined and extended such that for some routing paths, the provider computing systems 109 are queried, for other routing paths third-party computing systems are queried that hold data for a plurality of providers and/or for other or even the same routing paths, some details may be queried by requesting the data from a database or data storage comprised by the service computing system 101. The queried third-party computing systems may also comprise a database providing standard industry rules.

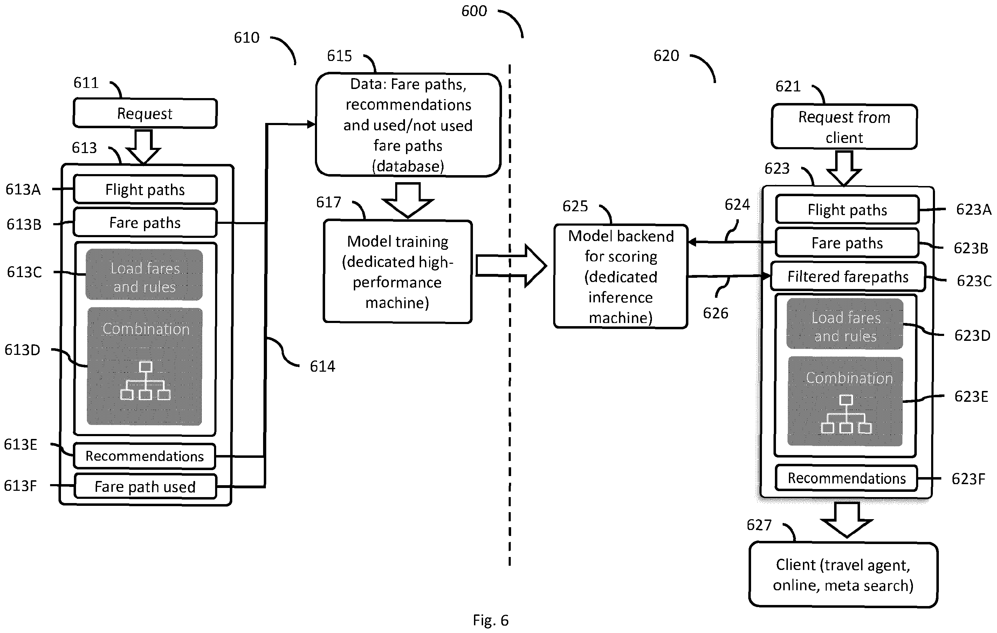

Fig. 6 depicts the workflow 600 of a specific embodiment of the method 200, namely the application of the method in a flight search environment. As already mentioned, the method 200 can be separated into two parts, the training part 610 of the machine learning model and the application part 620 of the machine learning model.

In this embodiment, the route is a flight path and the set of characteristics comprises pricing units for flight paths; hence the routing path corresponds to a fare path. The pricing units are e.g. a one-way segment, a round trip, a single open jaw, a double open jaw, and a circle trip. The details that are queried for the subset of routing paths here comprise rules and fares, wherein the rules determine whether fares can be applied on a routing path. Determining valid routing paths comprises analysing the rules

The training part 610 shows on the left side an example of a historical request 611 of a client, such as the client device 108. The request usually comprises a search for a flight from a departure location to a destination location. It may also comprise a date/time of the travel, mandatory intermediate stops and/or additional parameters.

The box 613 shows the process performed on the service computing system 101 without an application of a machine learning model to determine a subset of fare path. At first, possible flight paths 613A fulfilling the request 611 are determined. Then, possible fare paths 613B are determined, i.e. the flight paths are combined with possible pricing units. Then, rules and fares 613C are loaded for these fare paths.

Most airlines have a large number of different tariffs, that could be priced according to a set of restrictions called tariff combinations. Each tariff combination has a different set of rules, varying from possible combination with other airlines to geographical rules, such as domesticity. The rules relating to possible combinations are quite flexible and can be easily changed by airlines. Hence, they are not easily analysable. Fare Paths are in contrast stable through time. Therefore, despite volatility of fares and rules, the fare paths behind these fares and rules remain valid.

Since a plurality of fares may apply on one fare path, e.g. a fare for business travel and a fare for economy travel, providers may restrict usage of some fares on specific routes, and/or rules may define other restrictions etc., a combination process 613D takes place to build the final and valid fare paths used as recommendations 613E for the user. Additionally or alternatively, the historical data may be simulated, all actions comprised by the box 613 may result from a simulation of a client requesting model. The used fare path 613F, i.e. the fare path underlying recommendation booked by the client, is logged as well as the recommendations 613E and the originally constructed fare paths 613B, which is depicted by the line 614.

The logged historical data 615, i.e. data from a plurality of executions of box 613, is then stored in a database, e.g. the data storage 105. With this data, a machine learning model is trained 617, e.g. on the dedicated high-performance computing system 103. The model may be one of a gradient boosted tree, a neural network, or a random forest or a combination thereof.

The application part 620, i.e. that part comprising the execution of the machine learning model, shows on the right side an example of a new request 621 of a client, such as the client device 108. The request comprises a search for a flight from a departure location to a destination location. It may also comprise a date/time of the travel, mandatory intermediate stops and/or additional parameters.

The box 623 shows the process performed on the service computing system 101 including an application of the trained machine learning model to determine a subset of fare path. At first, possible flight paths 623A fulfilling the request 611 are again determined. Then, possible fare paths 623B are determined, i.e. the flight paths are combined with possible pricing units. These actions are identical to the actions 613A and 613B.

However, the fare paths 623B are here transmitted to the trained machine learning model 625, which is e.g. executed on the dedicated inference computing machine 107. This transmission is depicted by line 614. The machine learning model 625 then scores the fare paths, i.e. determines the selection prediction and returns a subset of fare paths, which is depicted by line 626. Only for this subset of fare paths, i.e. the filtered fare paths 623C, the fares and rules 623D are queried. Then, a combination process 623E builds the final and valid fare paths. These are used as recommendations 623F for the client, which are sent as response 627 to the client, such as the client device 108.

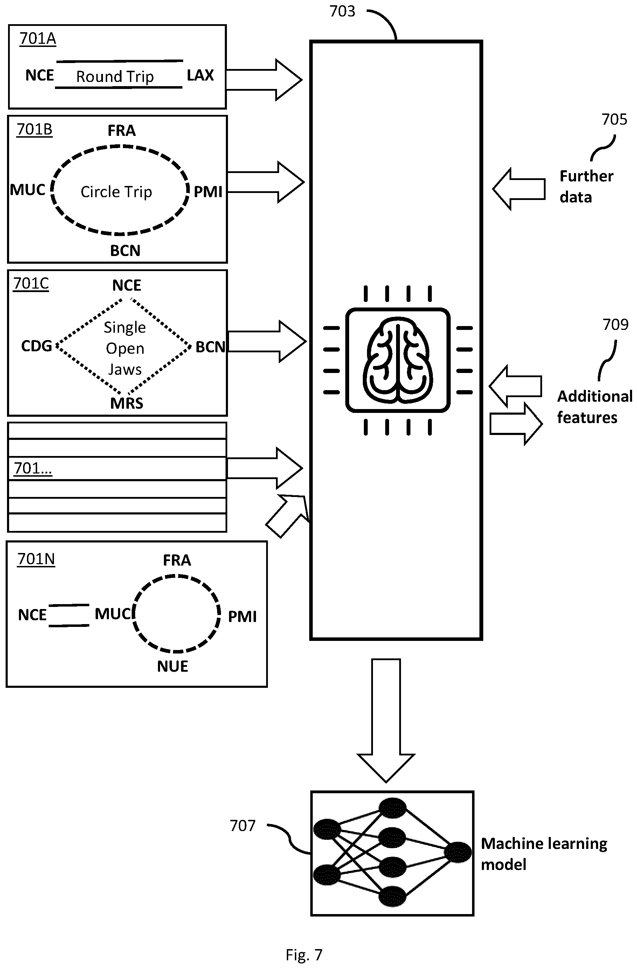

Fig. 7 presents an exemplary diagram of how the machine learning model is trained in the flight search embodiment. On the left, several fare paths 701A...N that have been logged before, i.e. historical data of fare paths, are depicted. For example, fare path 701A is a fare path comprising a flight path from Nice to Los Angeles and back with the characteristic, i.e. pricing unit, of a round trip. Fare path 701B is a fare path comprising a flight path from Munich to Palma de Mallorca via Frankfurt and back via Barcelona comprising the characteristic, i.e. pricing unit, of a circle trip, which may mean that all segments are provided by one carrier or by a alliance of carriers. Fare path 701B is a fare path comprising a flight path from Munich to Palma de Mallorca via Frankfurt and back via Barcelona comprising the characteristic, i.e. pricing unit, of a circle trip, which may mean that all segments are provided by one carrier or by an alliance of carriers.

These fare paths 701A...N and further data 705, i.e. details of the underlying query for the fare path, if the fare path was provided to the client device 108, and if the fare path was finally booked by the client device 108, are provided during the training 703 of the machine learning model. The machine learning model may be one of a gradient boosted tree, a neural network, or a random forest or a combination thereof. The machine learning model may also be any other applicable machine learning model suitable to solve the underlying problem. The result is then a trained machine learning model 707, i.e. determined parameters to set up the machine learning model for the use in the travel context, wherein the machine learning model is trained to predict a probability that the respective fare path will be selected.

In an embodiment, at least one additional feature 709 of a route may be determined that has an impact on the selected routing path. For example, analysis of parameters of the model and/or the output of the trained model may show that the degree of deviation from a direct connection may have an impact on whether a routing path is selected or not. Alternatively or additionally, it may be determined that carrier information, i.e. information about carriers providing the routes, has an impact on whether a routing path is selected or not. This at least one additional feature is then determined for each fare path 701A...N and also used as additional input for the training. This additional feature is then also determined for fare paths during the application of the machine learning model 707.

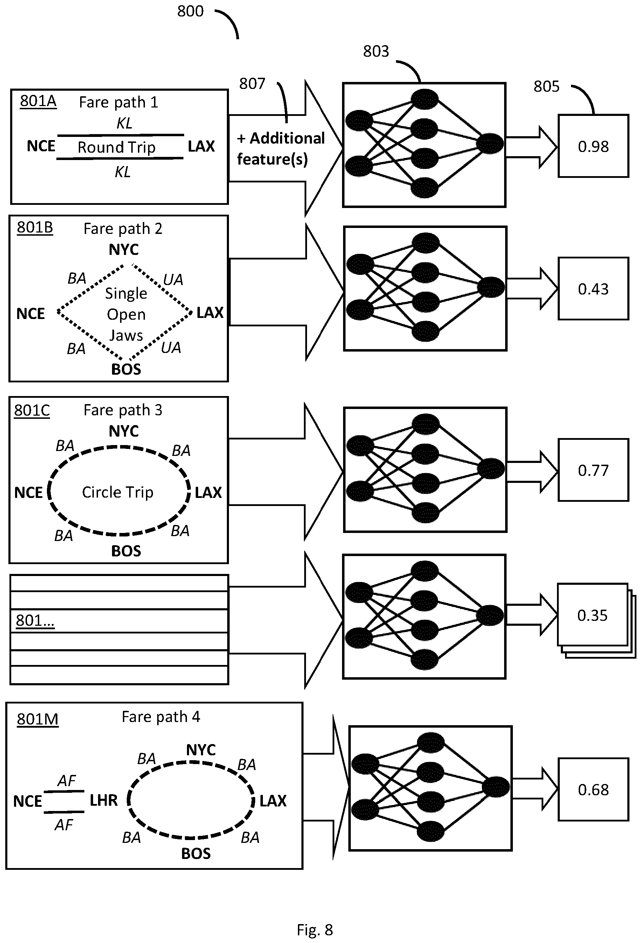

Fig. 8 shows how the machine learning model is applied for selecting fare paths in a flight search environment on the example of a request for a connection from Nice to Los Angeles and back to Nice. After determining the flight paths (not shown), the fare paths 801A...M are determined, which may for example be a round trip 801A without intermediate stops. The fare path may also be flights with intermediate stops and operated by different carriers characterized in two single open jaws like the fare path 801B. The fare path may also comprise a circle trip 801C or may be combinations of several pricing units 801M. These fare paths 801A...M are then propagated through the machine learning model 803. The output 805 is then the selection prediction of the fare path, which is then compared to a threshold. For example, if the threshold is 0.5 in this example, at least the fare paths 801A, 801C and 801M will find their way into the subset of fare paths.

In some embodiments, at least one additional feature 807, corresponding to the additional feature 709, for each fare path is calculated which is additionally used as input for the machine learning model. Thereby, the model output 805 can be significantly improved.

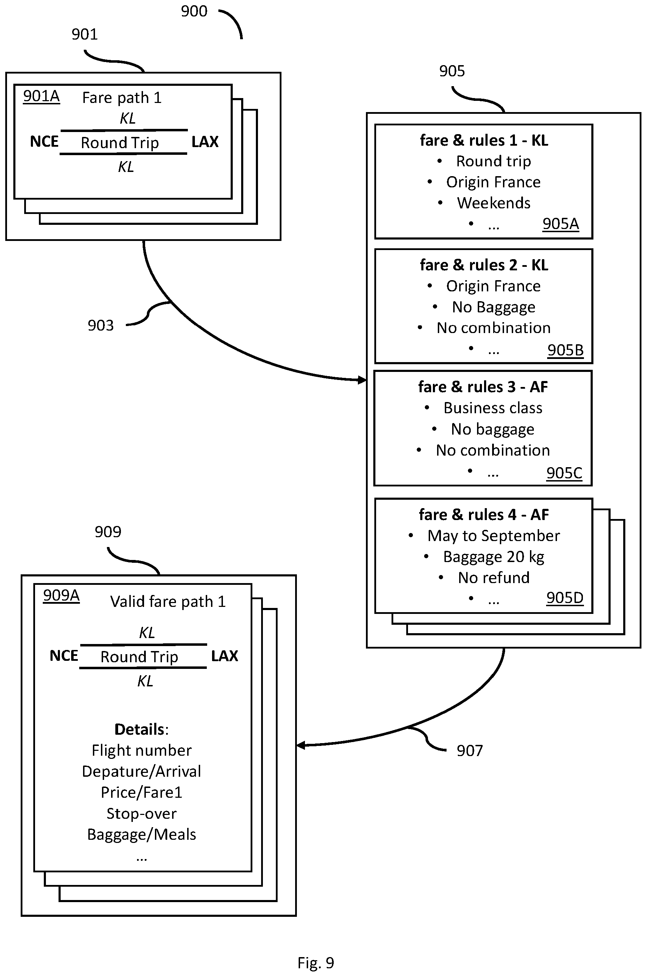

Fig. 9 depicts how valid fare paths are determined from the fare paths and the queried details. Details for the subset of fare paths 901 that have been determined by the use of the machine learning model are queried, e.g. from the providers of these fare paths, shown by line 903. These details comprise fares and rules 905. In this example, "fare & rules 1" 905A and "fare & rules 2" 905B may be fares and rules from KLM, "fare & rules 3" 905C and "fare & rules 4" 905D may be fares and rules from Air France and there may be many other providers that provide fares and rules for the fare paths 901. The queried details may also comprise further flight data, such as flight number, departure/arrival time, and the like. Alternatively, such data may also be already comprised by the flight paths or fare paths.

The fares & rules 905 are used to build the final products, shown by line 907, from the fare paths, i.e. a set of valid fare paths 909 is determined. If a fare is applicable according to the rules, then the final product is built. The details of the valid fare paths 909 may be a subset of the details of the fare and rules 905. In this example, the fare path 901A is combined with the fare and rules 905A to build the valid fare path 909A. In some embodiments all valid fare paths 909 are returned to the client device 108 for display and selection of a fare path by a user or a program. In other embodiments, only a subset it returned to the client device.

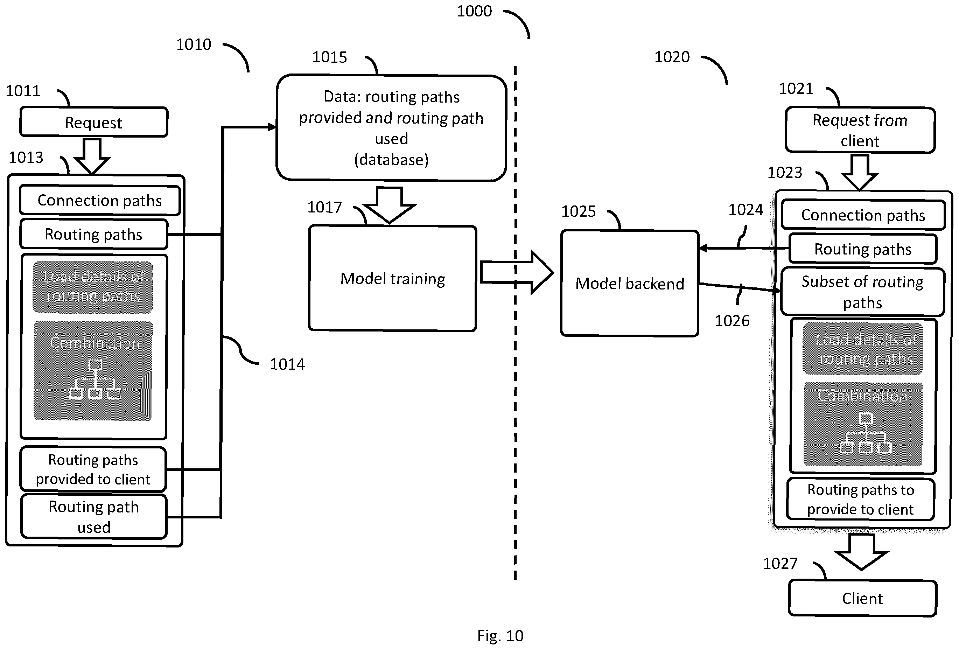

Fig. 10 shows the workflow of the method described herein in a network routing environment. As already mentioned, the method 200 can be separated into two parts, the training part 1010 of the machine learning model and the application part 1020 of the machine learning model.

In this embodiment, the route is a connection path in a network to transport data packets and the set of characteristics comprises different transmission speeds and/or transmittable volumes of data. The training part 1010 shows on the left side an example of a historical request 1011 of a client, such as the client device 108. The request for a connection path usually comprises at least a start node and an end node, e.g. specified by an IP address in the network. The request may also comprise a number of data packets to be sent to the end node.

The box 1013 shows the process performed on the service computing system 101 without an application of a machine learning model to determine a subset of routing paths. Therefore, possible connection paths are determined and combined with characteristics to determine a set of routing paths. Then, the details of these routing paths are determined. A combination process determines valid routing paths and provides at least a subset of them to the requesting clients. The selected, i.e. used, routing paths, the provided routing paths and the originally determined set of routing paths is logged, which is depicted by the line 1014.

The logged historical data 1015, i.e. data from a plurality of executions of box 1013, is then stored in a database, e.g. the data storage 105. With this data, a machine learning model is trained 1017, e.g. on the dedicated high-performance computing system 103. The model may be one of a gradient boosted tree, a neural network, or a random forest or a combination thereof.

The application part 1020, i.e. that part comprising the execution of the machine learning model, shows on the right side an example of a new request 1021 of a client, such as the client device 108. The request 1021 is a connections request as the request 1011.The box 1023 shows the process performed on the service computing system 101 including an application of the trained machine learning model to determine a subset of fare path.

The difference to the process 1013 is basically that the set of routing paths is sent to a model backend 1025 comprising the trained machine leaning model. Then, the machine learning model determines a subset of routing paths having a selection probability higher than a threshold and returns this subset to the service computing system 101, shown by line 1026. Only for this subset of routing paths, the details are queried and the final valid routing paths are built, which are sent send are response 1027 to the client, such as the client device 108.

In another embodiment, a computer program comprising instructions is provided. These instructions, when the program is executed by a computer, cause the computer to carry out the method described herein.

It should be appreciated that while particular embodiments and variations of the invention have been described herein, further modifications and alternatives will be apparent to persons skilled in the relevant arts. In particular, the examples are offered by way of illustrating the principles of the invention, and to provide a number of specific methods and arrangements for putting those principles into effect.

The described methods and systems simplify the computation of results in technical areas, in which the results consist in complex combinations of components following a graph or sequence structure. A machine learning model is trained on historical data to learn to predict a value and to select the type of graph or sequence with the highest values for the final combination forming the result. The method is used at run time in the generation of the result to a request to prioritize the most valuable sub-portion of the graph, reducing search space of the combination of components on these graphs, thus improving the product and reducing the computation costs. The methods described herein can be applied on abstraction layers of the components, removing the need to perform the evaluation for all possible set of components.

Although the machine learning model in the methods described herein is used to create a subset of routing paths, e.g. to filter fare paths, the person skilled in the art will know that the algorithm can also be driven by the models and guide the exploration of an underlying problem graph.

Accordingly, the described embodiments should be understood as being provided by way of example, for the purpose of teaching the general features and principles of the invention, but should not be understood as limiting the scope of the invention, which is as defined in the appended claims.

## Claims

1. A computer-implemented method for selecting routing paths, wherein a routing path comprises a route and at least one characteristic from a set of characteristics, wherein the route comprises at least a start node and an end node and is provided by at least one carrier, wherein the method comprises:
a. logging data of selected routing paths in response to requests from client devices to collect historical data of selected routing paths;
b. storing the data of selected routing paths in a data storage;
c. training a machine learning model on the historical data of selected routing paths received from the data storage, wherein an output of the machine learning model is a selection prediction for a routing path;
d. in response to a request from a client device:
i. determining a set of routes fulfilling the request;
ii. determining a set of routing paths by combining the set of routes with characteristics from the set of characteristics;
iii. applying the machine learning model on the set of routing paths to determine a subset of routing paths for which the selection prediction is higher than a threshold;
iv. querying details of the subset of routing paths, wherein querying details of the subset of routing paths comprises querying at least one of the at least one carrier providing a route in the subset of routing paths and third-party system providing standard industry rules;
v. determining valid routing paths; and
vi. returning at least a subset of the details of at least a subset of the valid routing paths to the client device.

2. The method according to claim 1, wherein the machine learning model is trained at a dedicated high-performance computing system comprising a cluster of servers, each server being equipped with at least one central processing unit and at least one graphics processing unit enabling parallel processing of the training.

3. The method according to claim 1 or 2, wherein applying the machine learning model, in response to the request of the client device, is performed at a dedicated inference computing system comprising a hardware-based inference accelerator architecture.

4. The method according to any one of claims 1 to 3, wherein, based on results of the training the machine learning model, at least one additional feature of a route is determined that has an impact on the selected routing paths, and wherein, in response to the request from the client device, the at least one additional feature of a route in the set of routing paths is determined and used as additional input for the machine learning model.

5. The method according to any one of claims 1 to 4, wherein determining valid routing paths comprises analysing the queried details of the subset of routing paths for applicability to the request of the client device.

6. The method according to any one of claims 1 to 5, wherein logging data of selected routing paths comprises logging the routing paths determined in response to an historical request from a client device, the respective routing paths provided to the requesting client device and the routing paths selected by the requesting client device.

7. The method according to any one of claims 1 to 6, wherein the threshold compared with the selection prediction is adapted based on a measured computational capacity for querying details of the subset of routing paths.

8. The method according to any one of claims 1 to 7, wherein the machine learning model is one of a gradient boosted tree or a neural network.

9. The method according to any one of claims 1 to 8 further comprising displaying the details of at least a subset of the valid routing paths on the client device for final selection of a routing path.

10. The method according to any one of claims 1 to 9, wherein the routing path is a fare path, in which the route is a flight path and the set of characteristics comprises pricing units for flight paths, wherein the pricing units comprise at least one of one-way, round trip, single open jaw, double open jaw, and circle trip, and wherein the details comprise rules and wherein determining valid fare paths comprises analysing the rules provided by the carriers providing a flight path comprised by the subset of fare paths.

11. The method according to claim 10, wherein the details of fare paths comprise at least one of a final price, at least one flight number, departure and/or arrival time, stop-over times, baggage rules, and included meals.

12. The method according to any one of claims 1 to 9, wherein the route is a connection path in a network to transport data packets and the set of characteristics comprises different transmission speeds and/or transmittable volumes of data.

13. A distributed computing system for selecting routing paths, wherein the distributed computing system comprises:
a. a service computing system configured to receive and answer requests for routing paths from client devices;
b. a dedicated high-performance computing system;
c. a data storage;
d. a dedicated inference computing system;
wherein the distributed computing system is configured to execute the method according to any one of claims 1 to 12.

14. A computer program comprising instructions which, when the program is executed by a computer, cause the computer to carry out the method according to any one of claims 1 to 12.

## Patentansprüche

1. Computer-implementiertes Verfahren zur Auswahl von Routingpfaden, wobei ein Routingpfad eine Route und mindestens ein Merkmal aus einer Menge von Merkmalen umfasst, wobei die Route mindestens einen Startknoten und einen Endknoten umfasst und von mindestens einem Beförderer bereitgestellt wird, wobei das Verfahren umfasst:
a. Protokollieren von Daten ausgewählter Routingpfade als Reaktion auf Anfragen von Client-Geräten, um historische Daten ausgewählter Routingpfade zu sammeln;
b. Speichern der Daten ausgewählter Routingpfade in einem Datenspeicher;
c. Trainieren eines maschinellen Lernmodells auf den historischen Daten ausgewählter Routingpfade, die von dem Datenspeicher empfangen wurden, wobei eine Ausgabe des maschinellen Lernmodells eine Auswahlvorhersage für einen Routingpfad ist;
d. als Antwort auf eine Anfrage von einem Client-Gerät:
i. Bestimmen einer Menge von Routen, die der Anfrage entsprechen;
ii. Bestimmen einer Menge von Routingpfaden durch Kombination der Menge von Routen mit Merkmalen aus der Menge von Merkmalen;
iii. Anwenden des maschinellen Lernmodells auf die Menge von Routingpfaden, um eine Teilmenge von Routingpfaden zu bestimmen, für die die Auswahlvorhersage höher als ein Schwellenwert ist;
iv. Abfragen von Details der Teilmenge von Routingpfaden, wobei das Abfragen von Details der Teilmenge von Routingpfaden das Abfragen mindestens eines der folgenden Systeme umfasst: des mindestens einen Beförderers, der eine Route in der Teilmenge von Routingpfaden bereitstellt, und eines Drittsystems, das Standard-Industrieregeln bereitstellt;
v. Bestimmen gültiger Routingpfade; und
vi. Rücksenden mindestens einer Teilmenge der Details von mindestens einer Teilmenge der gültigen Routingpfade an das Client-Gerät.

2. Verfahren nach Anspruch 1, wobei das maschinelle Lernmodell auf einem dedizierten Hochleistungs-Computersystem trainiert wird, das einen Cluster von Servern umfasst, wobei jeder Server mit mindestens einer zentralen Verarbeitungseinheit und mindestens einer Grafikverarbeitungseinheit ausgestattet ist, die eine parallele Verarbeitung des Trainings ermöglicht.

3. Verfahren nach Anspruch 1 oder 2, wobei das Anwenden des maschinellen Lernmodells als Reaktion auf die Anfrage des Client-Geräts auf einem dedizierten Inferenz-Computersystem durchgeführt wird, das eine hardwarebasierte Inferenz-Beschleunigerarchitektur umfasst.

4. Verfahren nach einem der Ansprüche 1 bis 3, wobei auf der Grundlage der Ergebnisse des Trainings des maschinellen Lernmodells mindestens ein zusätzliches Merkmal einer Route bestimmt wird, das eine Auswirkung auf die ausgewählten Routingpfade hat, und wobei in Reaktion auf die Anfrage von dem Client-Gerät das mindestens eine zusätzliche Merkmal einer Route in der Menge der Routingpfade bestimmt und als zusätzliche Eingabe für das maschinelle Lernmodell verwendet wird.

5. Verfahren nach einem der Ansprüche 1 bis 4, wobei das Bestimmen gültiger Routingpfade das Analysieren der abgefragten Details der Teilmenge von Routingpfaden auf Anwendbarkeit auf die Anfrage des Client-Geräts umfasst.

6. Verfahren nach einem der Ansprüche 1 bis 5, wobei das Protokollieren von Daten ausgewählter Routingpfade das Protokollieren der Routingpfade umfasst, die in Reaktion auf eine historische Anfrage von einem Client-Gerät bestimmt wurden, wobei die jeweiligen Routingpfade dem anfragenden Client-Gerät zur Verfügung gestellt werden und die Routingpfade von dem anfragenden Client-Gerät ausgewählt werden.

7. Verfahren nach einem der Ansprüche 1 bis 6, wobei der Schwellenwert, der mit der Auswahlvorhersage verglichen wird, auf der Grundlage einer gemessenen Berechnungskapazität für die Abfrage von Details der Teilmengen von Routingpfaden angepasst wird.

8. Verfahren nach einem der Ansprüche 1 bis 7, wobei das maschinelle Lernmodell entweder ein Gradient-Boosting-Baum oder ein neuronales Netz ist.

9. Das Verfahren nach einem der Ansprüche 1 bis 8 umfasst ferner die Anzeige der Details von mindestens einer Teilmenge der gültigen Routingpfade auf dem Client-Gerät zur endgültigen Auswahl eines Routingpfads.

10. Verfahren nach einem der Ansprüche 1 bis 9, wobei der Routingpfad ein Tarifpfad ist, bei dem die Route ein Flugpfad ist und die Menge von Merkmalen Preiseinheiten für Flugpfade umfasst, wobei die Preiseinheiten mindestens eines von Einfachflug, Hin- und Rückflug, einfachem Gabelflug, doppeltem Gabelflug und Rundflug umfassen, und wobei die Details Regeln umfassen, und wobei das Bestimmen gültiger Tarifpfade das Analysieren der Regeln umfasst, die von den Beförderern bereitgestellt werden, die einen Flugpfad bereitstellen, der von der Teilmenge der Tarifpfade umfasst wird.

11. Verfahren nach Anspruch 10, wobei die Details der Tarifpfade mindestens einen Endpreis, mindestens eine Flugnummer, Abflug- und/oder Ankunftszeit, Zwischenlandezeiten, Gepäckbestimmungen und eingeschlossene Mahlzeiten umfassen.

12. Verfahren nach einem der Ansprüche 1 bis 9, wobei die Route ein Verbindungspfad in einem Netz zum Transport von Datenpaketen ist und die Menge von Merkmalen unterschiedliche Übertragungsgeschwindigkeiten und/oder übertragbare Datenmengen umfasst.

13. Ein verteiltes Rechnersystem zur Auswahl von Routingpfaden, wobei das verteilte Rechensystem umfasst:
a. ein Dienstcomputersystem, das so konfiguriert ist, dass es Anfragen nach Routingpfaden von Client-Geräten empfängt und beantwortet;
b. ein dediziertes Hochleistungsrechnersystem;
c. einen Datenspeicher;
d. ein dediziertes Inferenz-Rechnersystem;
wobei das verteilte Rechnersystem so konfiguriert ist, dass es das Verfahren nach einem der Ansprüche 1 bis 12 ausführt.

14. Computerprogramm mit Befehlen, die, wenn das Programm von einem Computer ausgeführt wird, den Computer veranlassen, das Verfahren nach einem der Ansprüche 1 bis 12 auszuführen.

## Revendications

1. Procédé mis en œuvre par ordinateur pour sélectionner des trajectoires de routage, dans lequel une trajectoire de routage comprend un itinéraire et au moins une caractéristique d'un ensemble de caractéristiques, dans lequel l'itinéraire comprend au moins un nœud de début et un nœud de fin, et est fourni par au moins un transporteur, dans lequel le procédé comprend le fait de :
a. consigner des données de trajectoires de routage sélectionnées en réponse à des demandes de dispositifs clients de recueillir des données historiques de trajectoires de routage sélectionnées ;
b. stocker les données de trajectoires de routage sélectionnées dans un stockage de données ;
c. entraîner un modèle d'apprentissage machine sur les données historiques de trajectoires de routage sélectionnées reçues du stockage de données, dans lequel une sortie du modèle d'apprentissage machine est une prédiction de sélection pour une trajectoire de routage ;
d. en réponse à une demande d'un dispositif client :
i. déterminer un ensemble d'itinéraires satisfaisant à la demande ;
ii. déterminer un ensemble de trajectoires de routage en combinant l'ensemble d'itinéraires avec des caractéristiques de l'ensemble de caractéristiques ;
iii. appliquer le modèle d'apprentissage machine à l'ensemble de trajectoires de routage pour déterminer un sous-ensemble de trajectoires de routage où la prédiction de sélection est supérieure à un seuil ;
iv. interroger des détails du sous-ensemble de trajectoires de routage, dans lequel le fait d'interroger des détails du sous-ensemble de trajectoires de routage comprend le fait d'interroger au moins un parmi l'au moins un transporteur fournissant un itinéraire dans le sous-ensemble de trajectoires de routage et un système tiers fournissant des règles standard de l'industrie ;
v. déterminer des trajectoires de routage valides ; et
vi. renvoyer au moins un sous-ensemble de détails d'au moins un sous-ensemble de trajectoires de routage valides au dispositif client.

2. Procédé selon la revendication 1, dans lequel le modèle d'apprentissage machine est entraîné sur un système informatique dédié à haute performance comprenant une grappe de serveurs, chaque serveur étant équipé d'au moins une unité centrale de traitement et d'au moins une unité de traitement graphique permettant le traitement parallèle de l'entraînement.

3. Procédé selon la revendication 1 ou 2, dans lequel, en réponse à la demande du dispositif client, l'application du modèle d'apprentissage machine est effectuée sur un système informatique d'inférence dédié comprenant une architecture d'accélérateur d'inférence basée sur le matériel.

4. Procédé selon l'une des revendications 1 à 3, dans lequel, sur la base de résultats de l'entraînement du modèle d'apprentissage machine, on détermine au moins une fonctionnalité supplémentaire d'un itinéraire qui a un effet sur les trajectoires de routage sélectionnées, et dans lequel, en réponse à la demande du dispositif client, l'au moins une fonctionnalité supplémentaire d'un itinéraire dans l'ensemble de trajectoires de routage est déterminée et utilisée comme entrée supplémentaire pour le modèle d'apprentissage machine.

5. Procédé selon l'une des revendications 1 à 4, dans lequel le fait de déterminer des trajectoires de routage valides comprend le fait d'analyser les détails interrogés du sous-ensemble de trajectoires de routage pour ce qui est de leur applicabilité à la demande du dispositif client.

6. Procédé selon l'une des revendications 1 à 5, dans lequel le fait de consigner de données de trajectoires de routage sélectionnées comprend le fait de consigner les trajectoires de routage déterminées en réponse à une demande historique d'un dispositif client, les trajectoires de routage respectives fournies au dispositif client demandeur et les trajectoires de routage sélectionnées par le dispositif client demandeur.

7. Procédé selon l'une des revendications 1 à 6, dans lequel le seuil comparé à la prédiction de sélection est adapté sur la base d'une capacité de calcul mesurée pour interroger les détails du sous-ensemble de trajectoires de routage.

8. Procédé selon l'une des revendications 1 à 7, dans lequel le modèle d'apprentissage machine est l'un parmi un arbre à gradient renforcé ou un réseau neuronal.

9. Procédé selon l'une des revendications 1 à 8, comprenant en outre le fait d'afficher les détails d'au moins un sous-ensemble des trajectoires de routage valides sur le dispositif client pour la sélection finale d'une trajectoire de routage.

10. Procédé selon l'une des revendications 1 à 9, dans lequel la trajectoire de routage est une trajectoire tarifée où l'itinéraire est une trajectoire de vol, et l'ensemble de caractéristiques comprend des unités de fixation de prix pour des trajectoires de vol, dans lequel les unités de fixation de prix comprennent au moins un parmi un aller simple, un aller-retour, un trajet ouvert simple, un trajet ouvert double et un voyage circulaire, et dans lequel les détails comprennent des règles, et dans lequel le fait de déterminer des trajectoires tarifées valides comprend le fait d'analyser les règles fournies par les transporteurs fournissant une trajectoire de vol constituée par le sous-ensemble de trajectoires tarifées.

11. Procédé selon la revendication 10, dans lequel les détails de trajectoires tarifées comprennent au moins un parmi un prix final, au moins un numéro de vol, une heure de départ et/ou une heure d'arrivée, des heures d'escale, des règles relatives aux bagages, et des repas inclus.

12. Procédé selon l'une des revendications 1 à 9, dans lequel l'itinéraire est une trajectoire de connexion dans un réseau pour transporter des paquets de données, et l'ensemble de caractéristiques comprend différentes vitesses de transmission et/ou différents volumes de données transmissibles.

13. Système informatique distribué pour sélectionner des trajectoires de routage, dans lequel le système informatique distribué comprend :
a. un système informatique de service configuré pour recevoir des demandes de trajectoires de routage de dispositifs clients et y répondre ;
b. un système informatique dédié à haute performance ;
c. un stockage de données ;
d. un système informatique d'inférence dédié ;
dans lequel le système informatique distribué est configuré pour exécuter le procédé selon l'une des revendications 1 à 12.

14. Programme informatique comprenant des instructions qui, lorsque le programme est exécuté par un ordinateur, amènent l'ordinateur à mettre en œuvre le procédé selon l'une des revendications 1 à 12.
